# EUROPÄISCHE PATENTSCHRIFT

(11) **EP 1 521 925 B1**
(45) Veröffentlichungstag und Bekanntmachung des Hinweises auf die Patenterteilung: **07.05.2008**
(21) Anmeldenummer: 03763718.8
(22) Anmeldetag: 05.07.2003
(51) Int. Cl.: F16H 3/66

(54) **MEHRSTUFENGETRIEBE**
MULTI-SPEED GEARBOX
BOITE DE VITESSES MULTI-ETAGEE

(30) Priorität: 11.07.2002 DE 10231413
(43) Veröffentlichungstag der Anmeldung: 13.04.2005
(73) Patentinhaber: ZF FRIEDRICHSHAFEN Aktiengesellschaft, 88038 Friedrichshafen (DE)
(72) Erfinder: GUMPOLTSBERGER, Gerhard, 88045 Friedrichshafen (DE)
(86) Internationale Anmeldenummer: PCT/EP2003/007221
(87) Internationale Veröffentlichungsnummer: WO 2004/007997

(56) Entgegenhaltungen:
- WO-A-02/079670
- WO-A-02/079671
- DE-A- 19 912 480
- DE-A- 19 949 507
- US-A- 5 295 924
- US-B1- 6 217 474
- US-B1- 6 425 841

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der gattungsgemäßen DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Des weiteren ist aus der DE 199 12 480 A1 ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglicht gering gehalten werden. Des weiteren soll die Anzahl der Gänge sowie die Getriebespreizung erhöht werden.

Diese Aufgabe wird erfindungsgemäß durch die Merkmale des Patentanspruches 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind zumindest drei Einstegplanetensätze, mindestens sieben drehbare Wellen sowie zumindest sechs Schaltelemente, umfassend Bremsen und Kupplungen, vorgesehen, deren selektives Eingreifen verschiedene Übersetzungsverhältnisse zwischen der Antriebswelle und der Abtriebswelle bewirkt, sodass vorzugsweise sieben Vorwärtsgänge und ein Rückwärtsgang realisierbar sind.

Gemäß der vorliegenden Erfindung ist bei dem Mehrstufenschaltgetriebe vorgesehen, dass der Antrieb durch eine Welle erfolgt, welche ständig mit dem Sonnenrad des ersten Planetensatzes verbunden ist und dass der Abtrieb über eine Welle erfolgt, welche mit dem Hohlrad des zweiten Planetensatzes und einem Element des dritten Planetensatzes verbunden ist. Des weiteren ist bei dem erfindungsgemäßen Mehrstufengetriebe vorgesehen, dass eine dritte Welle ständig mit dem Steg des ersten Planetensatzes verbunden ist, dass eine vierte Welle ständig mit dem Steg des zweiten Planetensatzes und einem weiteren Element des dritten Planetensatzes verbunden ist, dass eine fünfte Welle ständig mit dem Hohlrad des ersten Planetensatzes verbunden ist, dass eine sechste Welle ständig mit dem Sonnenrad des dritten Planetensatzes verbunden ist und dass eine weitere, siebte Welle ständig mit dem Sonnenrad des zweiten Planetensatzes verbunden ist, wobei die Planetensätze mit Wellen und Schaltelementen gekoppelt sind.

Im Rahmen einer bevorzugten Ausführungsform ist die Abtriebswelle mit dem Hohlrad des zweiten Planetensatzes und dem Hohlrad des dritten Planetensatzes verbunden, wobei in diesem Fall die vierte Welle mit dem Steg des zweiten und dem Steg des dritten Planetensatzes verbunden ist und der erste Planetensatz und der zweite Planetensatz als Minus-Planetensätze und der dritte Planetensatz als Plus-Planetensatz ausgebildet sind.

Gemäß einer weiteren Ausführungsform ist die Abtriebswelle mit dem Hohlrad des zweiten Planetensatzes und dem Steg des dritten Planetensatzes verbunden, wobei in diesem Fall die vierte Welle mit dem Hohlrad des dritten Planetensatzes und dem Steg des zweiten Planetensatzes verbunden ist. Hierbei sind die drei Planetensätze als Minus-Planetensätze ausgebildet.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise vier Kupplungen und zwei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen beispielhaft näher erläutert. In diesen stellen dar:
- Fig. 1: eine schematische Ansicht einer bevorzugten Ausführungsform eines erfindungsgemäßen Mehrstufengetriebes;
- Fig. 2: eine schematische Ansicht einer weiteren bevorzugten Ausführungsform eines erfindungsgemäßen Mehrstufengetriebes und
- Fig. 3: ein Schaltschema für das erfindungsgemäße Mehrstufengetriebe gemäß Fig. 1 und Fig. 2.

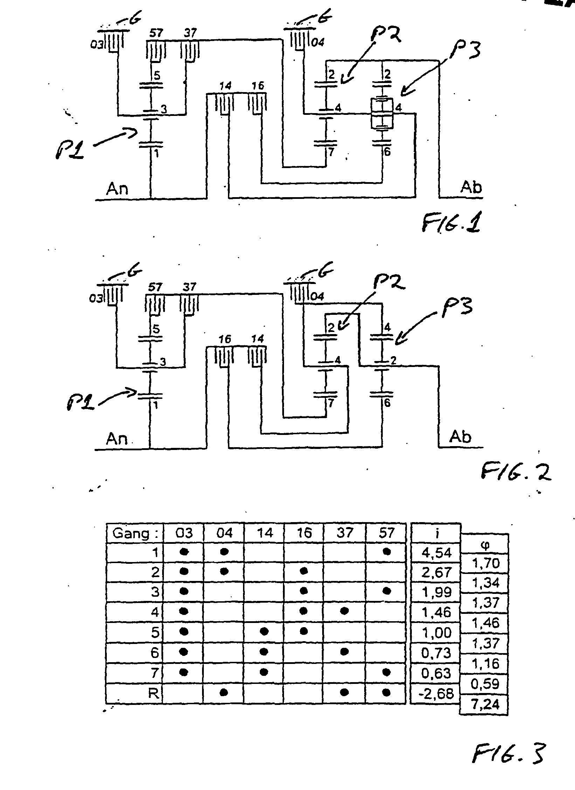

In Fig. 1 ist das erfindungsgemäße Mehrstufengetriebe mit einer Antriebswelle 1 (An) und einer Abtriebswelle 2 (Ab) dargestellt, welche in einem Gehäuse G angeordnet sind. Es sind drei Einsteg-Planetensätze P1, P2, P3 vorgesehen. Hierbei sind der erste Planetensatz P1 und der zweite Planetensatz P2 als Minus-Planetensätze ausgebildet; der dritte Planetensatz P3 ist gemäß der Erfindung als Plus-Planetensatz ausgebildet. Es ist auch möglich, dass der zweite Planetensatz P2 und der dritte Planetensatz P3 als Ravigneaux-Planetensatz mit gemeinsamen Steg und gemeinsamen Hohlrad zusammengefasst sind.

Wie aus den Fig. 1 und 2 ersichtlich, sind lediglich sechs Schaltelemente, nämlich zwei Bremsen 03, 04 und vier Kupplungen 14, 16, 37 und 57 vorgesehen.

Mit den Schaltelementen ist ein selektives Schalten von sieben Vorwärtsgängen und einem Rückwärtsgang realisierbar. Das erfindungsgemäße Mehrstufengetriebe weist gemäß insgesamt sieben drehbare Wellen auf, nämlich die Wellen 1, 2, 3, 4, 5, 6 und 7.

Erfindungsgemäß ist bei dem Mehrstufengetriebe gemäß Fig. 1 vorgesehen, dass der Antrieb durch die Welle 1 erfolgt, welche ständig mit dem Sonnenrad des ersten Planetensatzes P1 verbunden ist. Der Abtrieb erfolgt über die Welle 2, welche mit dem Hohlrad des zweiten Planetensatzes P2 und dem Hohlrad des dritten Planetensatzes P3 verbunden ist. Des weiteren ist die Welle 3 ständig mit dem Steg des ersten Planetensatzes und die Welle 4 ist ständig mit dem Steg des zweiten Planetensatzes P2 und dem Steg des dritten Planetensatzes P3 verbunden. Darüber hinaus ist die Welle 5 ständig mit dem Hohlrad des ersten Planetensatzes P1 verbunden. Die weitere drehbare Welle 6 ist erfindungsgemäß ständig mit dem Sonnenrad des dritten Planetensatzes P3 und die Welle 7 mit dem Sonnenrad des zweiten Planetensatzes P2 verbunden.

Bei dem erfindungsgemäßen Mehrstufengetriebe ist die Welle 3 durch die Bremse 03 und die Welle 4 durch die Bremse 04 an das Gehäuse G ankoppelbar. Die Kupplung 14 verbindet die Welle 1 und die Welle 3 lösbar miteinander; die Welle 1 und die Welle 6 sind über die Kupplung 16 lösbar miteinander verbunden. Des weiteren verbindet die Kupplung 37 die Wellen 3 und 7 und die Kupplung 57 die Wellen 5 und 7 lösbar miteinander.

In Fig. 2 ist eine weitere Ausführungsform des erfindungsgemäßen Mehrstufengetriebes gezeigt. Hierbei sind die Planetensätze P1, P2 und P3 als Minus-Planetensätze ausgebildet. Ein weiterer Unterschied zu der Ausführungsform gemäß Fig. 1 besteht darin, dass die Abtriebswelle 2 mit dem Hohlrad des zweiten Planetensatzes P2 und dem Steg des dritten Planetensatzes P3 verbunden ist und dass die Welle 4 ständig mit dem Steg des zweiten Planetensatzes P2 und dem Hohlrad des dritten Planetensatzes P3 verbunden ist.

In Fig. 3 ist ein Schaltschema des erfindungsgemäßen Mehrstufengetriebes gemäß den Fig. 1 und 2 dargestellt. Dem Schaltschema können die jeweiligen Übersetzungen i der einzelnen Gangstufen und die daraus zu bestimmenden Stufensprünge φ beispielhaft entnommen werden. Des weiteren kann dem Schaltschema entnommen werden, dass bei sequentieller Schaltweise Doppelschaltungen vermieden werden, da zwei benachbarte Gangstufen jeweils zwei Schaltelemente gemeinsam benutzen.

Für die sieben Vorwärtsgänge ist die Bremse 03 ständig geschlossen. Zusätzlich werden für den ersten Gang die Bremse 04 und die Kupplung 57, für den zweiten Gang die Bremse 04 und die Kupplung 16, für den dritten Gang die Kupplung 16 und die Kupplung 57, für den vierten Gang die Kupplungen 16 und 37, für den fünften Gang die Kupplungen 14 und 16, für den sechsten Gang die Kupplungen 14 und 37 und für den siebten Gang die Kupplungen 14 und 57 aktiviert. Im Rückwärtsgang R sind als Schaltelemente die Bremse 04 und die Kupplungen 37 und 57 aktiviert.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite oder auf der Abtriebsseite können zudem ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist. Das Anfahren kann gemäß der Erfindung auch mittels eines Schaltelements des Getriebes erfolgen. Bevorzugt kann als Anfahrelement die Bremse 04, die sowohl im ersten Vorwärtsgang als auch im ersten Rückwärtsgang aktiviert ist, verwendet werden.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, welches insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Die funktionalen Merkmale der Ansprüche können konstruktiv auf verschiedenartigste Weise ausgebildet sein. Der Einfachheit halber sind diese konstruktiven Ausbildungsmöglichkeiten nicht explizit beschrieben. Selbstverständlich fällt jedoch jede konstruktive Ausbildung der Erfindung, insbesondere jede räumliche Anordnung der Planetensätze und der Schaltelemente an sich sowie zueinander und soweit technisch sinnvoll, unter den Schutzumfang der Ansprüche.

### Bezugszeichen

- 1: Welle
- 2: Welle
- 3: Welle
- 4: Welle
- 5: Welle
- 6: Welle
- 7: Welle
- 03: Bremse
- 04: Bremse
- 14: Kupplung
- 16: Kupplung
- 37: Kupplung
- 57: Kupplung

- P1: Planetensatz
- P2: Planetensatz
- P3: Planetensatz
- An: Antrieb
- Ab: Abtrieb
- i: Übersetzung
- φ: Stufensprung
- G: Gehäuse

## Patentansprüche

1. Mehrstufengetriebe in Planetenbauweise, insbesondere ein Automatgetriebe für ein Kraftfahrzeug, umfassend eine Antriebswelle (1) und eine Abtriebswelle (2), welche in einem Gehäuse (G) angeordnet sind, drei Einsteg-Planetensätze (P1, P2, P3), mindestens sieben drehbare Wellen (1, 2, 3, 4, 5, 6, 7) sowie mindestens sechs Schaltelemente (03, 04, 14, 16, 37, 57), umfassend Bremsen und Kupplungen, deren selektives Eingreifen verschiedene Übersetzungsverhältnisse zwischen der Antriebswelle (1) und der Abtriebswelle (2) bewirkt, sodass sieben Vorwärtsgänge- und ein Rückwärtsgang realisierbar sind, der Antrieb durch eine erste Welle (1) erfolgt, welche ständig mit dem Sonnenrad des ersten Planetensatzes (P1) verbunden ist, der Abtrieb über eine zweite Welle (2) erfolgt, welche ständig mit dem Hohlrad des zweiten Planetensatzes (P2) und einem Element des dritten Planetensatzes (P3) verbunden ist, eine dritte Welle (3) ständig mit dem Steg des ersten Planetensatzes (P1) verbunden ist, eine vierte Welle (4) ständig mit dem Steg des zweiten Planetensatzes (P2) und einem weiteren Element des dritten Planetensatzes (P3) verbunden ist, dass eine fünfte Welle (5) ständig mit dem Hohlrad des ersten Planetensatzes (P1) verbunden ist, dass eine sechste Welle (6) ständig mit dem Sonnenrad des dritten Planetensatzes (P3) verbunden ist, eine siebte Welle (7) ständig mit dem Sonnenrad des zweiten Planetensatzes (P2) verbunden ist, eine Kupplung (14) die erste Welle (1) und die vierte Welle (4) lösbar miteinander verbindet, eine Kupplung (16) die erste Welle (1) und die sechste Welle (6) lösbar miteinander verbindet, eine Kupplung (37) die dritte Welle (3) und die siebte Welle (7) lösbar miteinander verbindet und wobei eine Kupplung (57) die fünfte Welle (5) und die siebte Welle (7) lösbar miteinander verbindet, **dadurch gekennzeichnet, dass** die dritte Welle (3) durch eine Bremse (03) an das Gehäuse (G) ankoppelbar ist und die vierte Welle (4) durch eine Bremse (04) an das Gehäuse (G) ankoppelbar ist.

2. Mehrstufengetriebe nach Anspruch 1, **dadurch gekennzeichnet, dass** die zweite Welle (2) mit dem Hohlrad des zweiten Planetensatzes (P2) und dem Hohlrad des dritten Planetensatzes (P3) verbunden ist und dass die vierte Welle (4) ständig mit dem Steg des zweiten Planetensatzes (P2) und dem Steg des dritten Planetensatzes (P3) verbunden ist, wobei der erste Planetensatz (P1) und der zweite Planetensatz (P2) als Minus-Planetensätze ausgebildet sind und der dritte Planetensatz (P3) als Plus-Planetensatz ausgebildet ist.

3. Mehrstufengetriebe nach Anspruch 2, **dadurch gekennzeichnet, dass** der zweite Planetensatz (P2) und der dritte Planetensatz (P3) als Ravigneaux-Planetensatz mit einem gemeinsamen Steg und einem gemeinsamen Hohlrad zusammengefasst sind.

4. Mehrstufengetriebe nach Anspruch 1, **dadurch gekennzeichnet, dass** die zweite Welle (2) mit dem Hohlrad des zweiten Planetensatzes (P2) dem Steg des dritten Planetensatzes (P3) verbunden ist und dass die vierte Welle (4) ständig mit dem Steg des zweiten Planetensatzes (P2) und dem Hohlrad des dritten Planetensatzes (P3) verbunden ist, wobei die Planetensätze (P1, P2, P3) als Minus-Planetensätze ausgebildet sind.

5. Mehrstufengetriebe nach einem der vorstehenden Ansprüche, **dadurch gekennzeichnet, dass** an jeder geeigneten Stelle zusätzliche Freiläufe einsetzbar sind.

6. Mehrstufengetriebe nach Anspruch 5, **dadurch gekennzeichnet, dass** die Freiläufe zwischen den Wellen (1, 3, 3, 4, 5, 6, 7) und dem Gehäuse (G) vorgesehen sind.

7. Mehrstufengetriebe nach einem der vorstehenden Ansprüche, **dadurch gekennzeichnet, dass** Antrieb und Abtrieb auf der gleichen Seite des Gehäuses vorgesehen sind.

8. Mehrstufengetriebe nach einem der vorstehenden Ansprüche, **dadurch gekennzeichnet, dass** ein Achs- und/oder ein Verteilerdifferential auf der Antriebsseite oder der Abtriebsseite angeordnet ist.

9. Mehrstufengetriebe nach einem der vorstehenden Ansprüche, **dadurch gekennzeichnet, dass** die Antriebswelle (1) durch ein Kupplungselement von einem Antriebs-Motor trennbar ist.

10. Mehrstufengetriebe nach Anspruch 9, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

11. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 10, anordbar ist, wobei die Antriebswelle (1) fest mit der Kurbelwelle des Motors verbunden ist.

12. Mehrstufengetriebe nach einem der vorstehenden Ansprüche, **dadurch gekennzeichnet, dass** das Anfahren mittels eines Schaltelements des Getriebes erfolgt, wobei die Antriebswelle (1) ständig mit der Kurbelwelle des Motors verbunden ist.

13. Mehrstufengetriebe nach Anspruch 12, **dadurch gekennzeichnet, dass** als Schaltelement eine der Kupplungen (57) oder eine der Bremse (04) einsetzbar ist.

14. Mehrstufengetriebe nach einem der vorstehenden Ansprüche, **dadurch gekennzeichnet, dass** zwischen Motor und Getriebe ein Torsionsschwingungsdämpfer anordbar ist.

15. Mehrstufengetriebe nach einem der vorstehenden Ansprüche, **dadurch gekennzeichnet, dass** auf jeder Welle eine verschleißfreie Bremse anordbar ist.

16. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

17. Mehrstufengetriebe nach Anspruch 16, **dadurch gekennzeichnet, dass** der Nebenabtrieb auf der Antriebswelle (1) oder der Abtriebswelle (2) anordbar ist.

18. Mehrstufengetriebe nach einem der vorstehenden Ansprüche, **dadurch gekennzeichnet, dass** die Schaltelemente als lastschaltende Kupplungen oder Bremsen ausgebildet sind.

19. Mehrstufengetriebe nach Anspruch 18, **dadurch gekennzeichnet, dass** Lamellenkupplungen, Bandbremsen und/oder Konuskupplungen einsetzbar sind.

20. Mehrstufengetriebe nach einem der Ansprüche 1 bis 17, **dadurch gekennzeichnet, dass** als Schaltelemente formschlüssige Bremsen und/oder Kupplungen vorgesehen sind.

21. Mehrstufengetriebe nach einem der vorstehenden Ansprüche, **dadurch gekennzeichnet, dass** auf jeder Welle als Generator und/oder als zusätzliche Antriebsmaschine eine elektrische Maschine anbringbar ist.

## Claims

1. Multistage transmission in planetary design, in particular an automatic transmission for a motor vehicle, including an input shaft (1) and an output shaft (2), which are arranged in a housing (G), three single-web planetary sets (P1, P2, P3), at least seven turnable shafts (1, 2, 3, 4, 5, 6, 7) and at least six shifting components (03,04,14,16,37,57), including brakes and clutches, whose selective engagements bring about various ratios between the input shaft (1) and the output shaft (2), so that seven forward speeds and one reverse speed can be realized, propulsion is effected by a first shaft (1) permanently linked to the sun gear of the first planetary set (P1), output is effected by a second shaft (2) permanently linked to the internal gear of the second planetary set (P2) and an element of the third planetary set (P3), a third shaft (3) is permanently linked to the web of the first planetary set (P1), a fourth shaft (4) is permanently linked to the web of the second planetary set (P2) and another element of the third planetary set (P3), a fifth shaft (5) is permanently linked to the internal gear of the first planetary set (P1), a sixth shaft (6) is permanently linked to the sun gear of the third planetary set (P3), a seventh shaft (7) is permanently linked to the sun gear of the second planetary set (P2), a clutch (14) releasably links the first shaft (1) and the fourth shaft (4), a clutch (16) releasably links the first shaft (1) and the sixth shaft (6), a clutch (37) releasably links the third shaft (3) and the seventh shaft (7), and one clutch (57) releasably links the fifth shaft (5) and the seventh shaft (7), **characterized in that** the third shaft (3) can be coupled to the housing (G) by a brake (03) and the fourth shaft (4) can be coupled to the housing (G) by a brake (04).

2. Multistage transmission acc. to claim 1, **characterized in that** the second shaft (2) is linked to the internal gear of the second planetary set (P2) and the internal gear of the third planetary set (P3) and that the fourth shaft (4) is permanently linked to the web of the second planetary set (P2) and the web of the third planetary set (P3), with the first planetary set (P1) and the second planetary set (P2) being designed as minus planetary sets and the third planetary set (P3) being designed as plus planetary set

3. Multistage transmission acc. to claim 2, **characterized in that** the second planetary set (P2) and the third planetary set (P3) are combined as a Ravigneaux planetary set with a common web and a common internal gear.

4. Multistage transmission acc. to claim 1, **characterized in that** the second shaft (2) is linked to the internal gear of the second planetary set (P2) and the web of the third planetary set (P3), and that the fourth shaft (4) is permanently linked to the web of the second planetary set (P2) and the internal gear of the third planetary set (P3), with the planetary sets (P1, P2, P3) being designed as minus planetary sets.

5. Multistage transmission according to one of the preceding claims, **characterized in that** additional sprag clutches can be used in any suitable place.

6. Multistage transmission acc. to claim 5, **characterized in that** the sprag clutches are provided between the shafts (1, 3, 3, 4, 5, 6, 7) and the housing (G).

7. Multistage transmission acc. to one of the preceding claims, **characterized in that** input and output are provided on the same side of the housing.

8. Multistage transmission acc. to one of the preceding claims, **characterized in that** an axle differential and/or a center differential is/are arranged on the input side or the output side.

9. Multistage transmission acc. to one of the preceding claims, **characterized in that** the input shaft (1) can be separated from a propelling engine by a clutch element.

10. Multistage transmission acc. to claim 9, **characterized in that** the clutch element can be a hydrodynamic converter, a hydraulic clutch, a dry starting clutch, a wet starting clutch, a magnetic powder clutch, or a centrifugal dutch.

11. Multistage transmission acc. to one of the preceding claims, **characterized in that** an external starting element, in particular one acc. to claim 10, can be arranged in the direction of power flow behind the transmission, with the input shaft (1) being firmly linked to the crankshaft of the engine.

12. Multistage transmission acc. to one of the preceding claims, **characterized in that** starting is performed by means of a shifting component of the transmission, with the input shaft (1) being permanently linked to the crankshaft of the engine.

13. Multistage transmission acc. to claim 12, **characterized in that** one of the clutches (57) or one of the brakes (04) can be used as shifting component.

14. Multistage transmission acc. to one of the preceding claims, **characterized in that** a torsional-vibration damper can be arranged between engine and transmission.

15. Multistage transmission acc. to one of the preceding claims, **characterized in that** a nonwearing brake can be arranged on each shaft.

16. Multistage transmission acc. to one of the preceding claims, **characterized in that** a PTO can be arranged on each shaft to drive additional units.

17. Multistage transmission ace. to claim 16, **characterized in that** the PTO can be arranged on the input shaft (1) or the output shaft (2).

18. Multistage transmission acc. to one of the preceding claims, **characterized in that** the shifting components are designed as powershift clutches or brakes.

19. Multistage transmission acc. to claim 18, **characterized in that** multidisk clutches, band brakes and/or cone clutches can be used.

20. Multistage transmission acc. to one of the claims 1 thru 17, **characterized in that** positive brakes and/or clutches are provided as shifting components.

21. Multistage transmission acc. to one of the preceding claims, **characterized in that** an electric machine as generator and/or extra drive machine can be provided on each shaft.

## Revendications

1. Transmission multivitesses à trains épicycloïdaux, en particulier une transmission automatique pour un véhicule automobile, comportant un arbre d'entrée (1) et un arbre de sortie (2) disposés dans un carter (G), trois trains planétaires à arbre porte-satellites (P1, P2, P3), au moins sept arbres rotatifs (1, 2, 3, 4, 5, 6, 7) ainsi que au moins six éléments de commande (03, 04, 14, 16, 37, 57), comprenant des freins et des embrayages, dont l'engagement sélectif détermine différents rapports de démultiplication entre l'arbre d'entrée (1) et l'arbre de sortie (2), de manière à ce que soient réalisables sept vitesses en marche avant et une marche arriére, l'entraînement s'effectuant par un premier arbre (1), celui-ci étant relié en permanence au planétaire du premier train planétaire (P1), la sortie s'effectuant par un deuxième arbre (2), celui-ci étant relié en permanence à la couronne du deuxième train planétaire (P2) et à un élément du troisième train planétaire (P3), un troisième arbre (3) étant relié en permanence à l'arbre porte-satellites du premier train planétaire (P1), un quatrième arbre (4) étant relié en permanence à l'arbre porte-satellites du deuxième train planétaire (P2) et à un autre élément du troisième train planétaire (P3), un cinquième arbre (5) étant relié en permanence à la couronne du premier train planétaire (P1), un sixième arbre (6) étant relié en permanence au planétaire du troisième train planétaire (P3), un septième arbre (7) étant relié en permanence au planétaire du deuxième train planétaire (P2), un embrayage (14) reliant le premier arbre (1) et le quatrième arbre (4) de façon découplable l'un à l'autre, un embrayage (16) reliant le premier arbre (1) et le sixième arbre (6) de façon découplable l'un à l'autre, un embrayage (37) reliant le troisième arbre (3) et le septième arbre (7) de façon découplable run à l'autre, sachant qu'un embrayage (57) relie le cinquième arbre (5) et le septième arbre (7) de façon découplable l'un à l'autre, **caractérisée en ce que** le troisième arbre (3) peut être couplé au carter (G) par un frein (03) et le quatrième arbre (4) peut être couplé au carter par un frein (04).

2. Transmission multivitesses selon la revendication 1, **caractérisée en ce que** le deuxième arbre (2) est relié à la couronne du deuxième train planétaire (P2) et à la couronne du troisième train planétaire (P3) et **en ce que** le quatrième arbre (4) est relie en permanence à l'abre porte-satellites du deuxième train planétaire (P2) et à l'arbre porte-satellites du troisième train planétaire (P3), sachant que le premier train planétaire (P1) et le deuxième train planétaire (P2) sont réalisés en tant que trains planétaires négatifs et le troisième train planétaire (P3) est réalisé en tant que train planétaire positif.

3. Transmission multivitesses selon la revendication 2, **caractérisée en ce que** le deuxième train planétaire (P2) et le troisième train planétaire (P3) sont regroupés dans un train Ravigneaux comportant un arbre porte-satellites commun et une couronne commune.

4. Transmission multivitesses selon la revendication 1, **caractérisée en ce que** le deuxième arbre (2) est relié à la couronne du deuxième train planétaire (P2) et à l'arbre porte-satellites du troisième train planétaire (P3) et **en ce que** le quatrième arbre (4) est relié en permanence à l'arbre porte-satellites du deuxième train planétaire (P2) et à la couronne du troisième train planétaire (P3), sachant que les trains planétaires (P1, P2, P3) sont réalisés en tant que trains planétaires négatifs.

5. Transmission multivitesses selon une des revendications précédentes, **caractérisée en ce que** dans chaque emplacement approprié peuvent être montées des roues libres.

6. Transmission multivitesses selon la revendication 5, **caractérisée en ce que** les roues libres sont prévues entre les arbres (1,2,3,4,5,6,7) et le carter (G).

7. Transmission multivitesses selon une des revendications précédentes,
**caractérisée en ce que** l'entrée et la sortie sont prévues sur le même côté du carter.

8. Transmission multivitesses selon une des revendications précédentes,
**caractérisée en** que un différentiel de pont et/ou un différentiel de transfert sont disposés du côté entrée ou du côté sortie.

9. Transmission multivitesses selon une des revendications précédentes, **caractérisée en** que l'arbre d'entrée (1) peut être séparé d'un moteur d'entraînement au moyen d'un organe d'accouplement

10. Transmission multivitesses selon la revendication 9, **caractérisée en** que en tant qu'organe d'accouplement est prévu un convertisseur de couple hydrodynamique, un coupleur hydraulique, un embrayage de démarrage à sec, un embrayage de démarrage en bain d'huile, un embrayage à poudre magnétique ou un embrayage centrifuge.

11. Transmission multivitesses selon une des revendications précédentes,
**caractérisée en** que dans le sens de la chaîne cinématique et en aval de la boîte de vitesses peut être disposé un organe de démarrage externe, en particulier selon la revendication 10, sachant que l'arbre d'entrée (1) est monté de manière solidaire sur le vilebrequin du moteur.

12. Transmission multivitesses selon une des revendications précédentes,
**caractérisée en** que le démarrage s'effectue au moyen d'un élément de commande de la boîte de vitesses, sachant que l'arbre d'entrée (1) est relié en permanence au vilebrequin du moteur.

13. Transmission multivitesses selon la revendication 12, **caractérisée en** que en tant qu'élément de commande peut être utilisé un des embrayages (57) ou un des freins (04).

14. Transmission multivitesses selon une des revendications précédentes,
**caractérisée** en que entre le moteur et la boîte de vitesses peut être disposé un amorbsseur torsionnel.

15. Transmission multivitesses selon une des revendications précédentes, **caractérisée en ce que** sur chaque arbre peut être disposé un frein sans usure.

16. Transmission multivitesses selon une des revendications précédentes, **caractérisée en ce que** sur chaque arbre peut être disposé une prise de mouvement pour l'entraînement d'organes supplémentaires.

17. Transmission multivitesses selon la revendication 16, **caractérisée en ce que** la prise de mouvement peut être disposée sur l'arbre d'entrée (1) ou sur l'arbre de sortie (2).

18. Transmission multivitesses salon une des revendications précédentes, **caractérisée en ce que** les éléments de commande sont réalisés en tant qu'embrayages ou freins couplables sous charge.

19. Transmission multivitesses selon la revendication 18, **caractérisée en ce que** peuvent être utilisés des embrayages à disques, des freins à ruban et/ou des embrayage à cône.

20. Transmission multivitesses selon une des revendications 1 à 17, **caractérisée en ce que** en tant qu'éléments de commande sont prévus des freins et/ou des embrayages à commande mécanique.

21. Transmission multivitesses selon une des revendications précédentes,
**caractérisée en ce que**, en tant que générateur et/ou machine motrice supplémentaire sur chaque arbre peut être montée une machine électrique.
